# EUROPÄISCHE PATENTSCHRIFT

(11) **EP 3 237 851 B1**
(45) Veröffentlichungstag und Bekanntmachung des Hinweises auf die Patenterteilung: **26.10.2022**
(21) Anmeldenummer: 15804341.4
(22) Anmeldetag: 18.11.2015
(51) Int. Cl.: G01F 1/684, G01F 1/69

(54) **THERMISCHES DURCHFLUSSMESSGERÄT**
THERMAL TYPE FLOWMETER
DÉBITMÈTRE DU TYPE THERMIQUE

(30) Priorität: 23.12.2014 DE 102014119556
(43) Veröffentlichungstag der Anmeldung: 01.11.2017
(73) Patentinhaber: Endress+Hauser Flowtec AG, 4153 Reinach (CH)
(72) Erfinder: GABERTHÜEL, Stephan, 4104 Oberwil (CH); BARTH, Martin, 4125 Riehen (CH); PFAU, Axel, 79664 Wehr (DE)
(74) Vertreter: Penner, Paul
(86) Internationale Anmeldenummer: PCT/EP2015/076927
(87) Internationale Veröffentlichungsnummer: WO 2016/102124

(56) Entgegenhaltungen:
- DE-A1-102013 108 099
- DE-C1- 19 725 398
- US-A1- 2006 101 907
- US-A1- 2009 139 348
- US-A1- 2010 154 559

## Beschreibung

Die Erfindung betrifft ein thermisches Durchflussmessgerät nach dem Oberbegriff des Anspruchs 1.

Es sind Sensoren für Durchflussmessgeräte bekannt, welche nach dem thermischen Messprinzip arbeiten. So lehren beispielsweise die US 2006/0101907 A1, US 2009/0139348 A1 und die DE 197 25 398 C1 thermische Durchflussmessgeräte, welche an einem Bypass zu einer Rohrleitung angeordnet sind und dazu eingerichtet sind, den Durchfluss eines abgeführten Gases oder einer abgeführten Flüssigkeit zu bestimmen. Das Messprinzip beruht auf der Abkühlung eines beheizten Widerstandsthermometers, nachfolgend auch als heizendes und messendes oder aktives Sensorelement bezeichnet, dem durch das vorbeiströmende Messmedium Wärme entzogen wird. Die entzogene Energie wird durch ein Erhöhen des elektrischen Heizstroms wieder ausgeglichen. Dadurch stellt sich eine konstante Temperaturdifferenz zwischen dem heizenden und messenden, also dem aktiven Sensorelement und einem vorhandenen Referenztemperaturfühler ein, welches nachfolgend auch als messendes oder passives Sensorelement bezeichnet wird. Je grösser der Massedurchfluss ist, desto mehr Energie wird benötigt, um diese Differenz zu halten. Der gemessene Heizstrom ist demzufolge proportional zum Massedurchfluss. Das thermische Messprinzip ist in der Verfahrenstechnik gut etabliert und wird in zahlreichen Anwendungen erfolgreich eingesetzt. Besonders anspruchsvoll ist die Anwendung des Messprinzips in Wasser und anderen Flüssigkeiten wie z.B. Öl, da hier die Wärmeübergänge und die benötigte Heizleistung im Vergleich zu Gasen wesentlich höher und die relevanten Stoffeigenschaften sehr stark temperaturabhängig sind. Bei Geschwindigkeiten >2,5 m/s kann es deshalb zu einer Abflachung der Kennlinie und damit zu einer verringerten Sensitivität kommen. Außerdem kann es bei geringer Beabstandung der Sensorelemente zueinander unter Umständen zu einem Übersprechen des aktiven Sensorelements zum temperaturmessenden Sensorelement kommen, z.B. bei tiefen Geschwindigkeiten <0,2 m/s.

Es sind Sensoren bekannt, welche sich aus zwei Sensorelementen, einem aktiven und einem passiven Sensorelement bestehen, welche jeweils eine zylindrische Sensorkappe aufweisen und aus einer Grundfläche eines Sensors herausstehen. In der Stirnfläche der Sensorkappen sind Widerstandssensoren eingelötet. Aufgrund der zylindrischen Sensorkappen weisen die Sensorelemente bereits eine gute thermische Isolation auf und so kein Übersprechen zustande kommt. Diese Sensoren verfügen allerdings über eine schlechtere Charakteristik in Wasser, als die zuvor genannten Sensoren. So erreicht bei steigendem Durchfluss die Kennlinie vergleichsweise schnell einen Sättigungsgrad, bei welcher eine maximale Leistung einspeisbar ist. Bei Erreichen dieser Leistungsgrenze kann trotz höherer Geschwindigkeit nicht mehr Wärme in die Strömung eingetragen werden. Da die Kennlinie den Messbereich für die Strömungsgeschwindigkeit des Mediums darstellt, bis welcher eine Messung erfolgen kann, ist bei einem schnellen Erreichen des Sättigungsgrades die Messung bei zu schnelleren Strömungen nicht mehr möglich.

Die DE 10 2013 108 099 A1 greift dieses Problem auf und beschreibt eine Lösung für dieses Problem. In dieser Druckschrift wird ein Sensorelement bzw. ein Sensor beschrieben, der über einen Stutzen radial in eine Rohrleitung eingeführt wird. Dabei verfügt das Sensorelement über keine stiftförmigen Hülsen sondern über eine Sensorkappe mit angewinkelten Flächen. Die spezielle geometrische Ausgestaltung der Sensorkappe erlaubt es ein Strömungsprofil mit einer Abrisskante und einer definierten Rezirkulationszone bereitzustellen. Da der Durchmesser des radial eingebrachten Sensors teils größer ist als der Rohrdurchmesser, wird eine Rohr-Schweißkonstruktion sehr kompliziert.

Es ist nunmehr die Aufgabe der vorliegenden Erfindung, ausgehend von der DE 10 2013 108 099 A1 und dem einleitend zitierten Stand der Technik, eine Messbereichserweiterung eines thermischen Durchflussmessgerätes zu erreichen, die auch bei kleinen Rohrsystemen anwendbar ist.

Diese Aufgabe wird durch ein thermisches Durchflussmessgerät mit den Merkmalen des Anspruchs 1 gelöst.

Ein erfindungsgemäßes thermisches Durchflussmessgerät zur Bestimmung und/oder Überwachung eines thermischen Massedurchflusses eines Messmediums umfasst ein Sensorelement mit einem Messrohr mit einer Rohrwandung und mit zumindest einem ersten und einem zweiten Temperaturfühlerelement, welche insbesondere als ein Widerstandsthermometer ausgebildet sind. Diese sind am Messrohr angeordnet. Zumindest eines der Temperaturfühlerelemente ist dabei beheizbar.

Das Messrohr weist eine Längsachse und eine Rohrkontur mit einem ersten Rohrquerschnitt in den Endbereichen auf. Diese Bereiche entsprechen einer üblichen normalen Rohrkontur. Die Endbereiche sind insbesondere die Anschlussbereiche, an denen das Messrohr in eine Prozessleitung eingefügt wird. Das Messrohr kann z.B. verschweißt oder über Flansche befestigt werden. Neben der Sensoreinheit weist das thermische Durchflussmessgerät vorzugsweise auch eine Mess- und Auswerteeinheit auf, welche üblicherweise als Transmitter ausgebildet ist. Die Sensoreinheit wird vorzugsweise durch ein Gehäuse vor Umwelteinflüssen geschützt.

Das Messrohr weist zudem eine Verengung auf mit einem zweiten Rohrquerschnitt, welcher in Form und/oder Flächeninhalt vom ersten Rohrquerschnitt abweicht. Diese Abweichung ist im Begriff einer Verengung eigentlich inhärent vorhanden.

Die Verengung ist in zumindest zwei Segmente aufgeteilt, welche gegenüber der Längsachse des Messrohres um einen Winkel von zumindest 5° angewinkelt sind. Dadurch wird ein optimiertes Strömungsprofil, z.B. mit einer Abrisskante, erreicht. Alternativ zur Längsachse kann auch der Messrohrverlauf in Längsrichtung im Bereich der normalen Rohrkontur als Bezugssystem genutzt werden.

Die Verengung ist in zumindest drei Segmente, einem ersten Segment, einem Mittelsegment und einem dritten Segment aufgeteilt, wobei die Segmente in dieser Reihenfolge in Strömungsrichtung nacheinander bzw. hintereinander angeordnet sind. Die Temperaturfühlerelemente sind dabei an dem ersten und dritten Segment angeordnet. Dabei sind das erste und dritte Segment jeweils als eine gegenüber der Längsachse geneigte ebene Fläche ausgebildet, die gegenüber der Längsachse des Messrohres um einen Winkel von zumindest 5° angewinkelt ist.

Jeweils eines der Temperaturfühlerelemente ist in jeweils einem der zwei Segmente von außen an der Rohrwandung des Messrohres angeordnet. D.h. in dem ersten und dritten Segment ist jeweils eines der Temperaturfühlerelemente angeordnet. Die Temperaturfühlerelemente befinden sich sich im thermischen Kontakt mit dem Messmedium. Das heißt sie geben Wärme an das Messmedium ab und ermitteln die Mediumstemperatur durch die Wandung des Messrohres hindurch. Hierbei bietet sich insbesondere eine metallische Rohrwandung an. Durch die Verengung als integraler Bestandteil des Messrohres und durch die Anordnung der Temperaturfühlerelemente in diesem Bereich kann das thermische Durchflussmessgerät gerade bei Anwendungen mit kleinen Nennweiten kostengünstig hergestellt werden. Aufgrund der besseren Handhabung bei der Herstellung misst das Gerät auch exakt und weist von Durchflussgerät zu Durchflussgerät eine gleichbleibende Messperformance auf.

Die zumindest zwei Segmente, an welchen die Temperaturfühlerelemente angeordnet sind, sind eben ausgebildet.

Vorteilhafte Ausgestaltungen der Erfindung sind Gegenstand der Unteransprüche.

Aus Gründen der Dematerialisierung und Bauteilreduzierung ist es von Vorteil, wenn die Verengung Teil der Rohrwandung ist.

Das Mittelsegment ist ebenfalls vorteilhaft eben ausgebildet, mit einer Flächennormalen, welche senkrecht zur Längsachse des Messrohres steht.

Zur guten thermischen Überleitung der Wärme ist es von Vorteil, wenn die Messrohrwandung kleiner ist als 1cm, vorzugsweise kleiner oder gleich 0,5 mm. Zudem lässt sich die Kontur einer solchen Messrohrwandung besser ausbilden. Es ist auch möglich ein Messrohr mit dickerer Messrohrwandung zu nutzen und lediglich die Segmente in welchem die Temperaturfühlerelemente sind angeordnet dünner zu gestalten. Dies kann z.B. in einem materialabtragenden Nachbearbeitungsschritt erfolgen.

Besondere herstellungstechnische Vorteile bietet die erfindungsgemäße Ausgestaltung des Durchflussmessgerätes, sofern die Rohrkontur des Messrohres eine Nennweite von kleiner DN20, aufweist.

Zur Vorgabe eines weiter optimierten Strömungsprofils ist es von Vorteil, wenn das Messrohr zwei ebene Mittelsegmente aufweist, welche sich diametral am Messrohr gegenüberstehen und welche eine Flächennormale aufweisen, welche senkrecht zur Längsachse des Messrohres verläuft.

Die Verengung mit den zumindest zwei Segmenten, in welchen die Temperaturfühlerelemente angeordnet sind, lässt sich auf massenproduktionstaugliche Weise durch ein Umformverfahren vorteilhaft realisieren. Selbstverständlich können auch größere Rohrwandungsbereiche mit mehr als zwei Segmenten durch das Umformverfahren ausgestaltet werden.

Es ist von Vorteil, wenn der Flächennormalenvektor der geneigten Fläche des ersten Segments mit der Längsachse einen Winkel von zumindest 8°, besonders bevorzugt zwischen 10-35° einschließt.

Mehrere erfindungsgemäße Ausführungsbeispiele werden nachfolgend anhand von Figuren näher beschrieben. Sie zeigen:
Fig. 1 Perspektivansicht einer ersten Ausführungsvariante eines Sensorelements eines erfindungsgemäßen thermischen Durchflussmessgerätes;
Fig. 2 Seitenansicht einer ersten Ausführungsvariante eines Sensorelements eines erfindungsgemäßen thermischen Durchflussmessgerätes;
Fig. 3 Schnittansicht einer ersten Ausführungsvariante eines Sensorelements eines erfindungsgemäßen thermischen Durchflussmessgerätes;
Fig. 4 Perspektivansicht einer zweiten Ausführungsvariante eines Sensorelements eines erfindungsgemäßen thermischen Durchflussmessgerätes;
Fig. 5 Seitenansicht einer zweiten Ausführungsvariante eines Sensorelements eines erfindungsgemäßen thermischen Durchflussmessgerätes;
Fig. 6 Schnittansicht einer zweiten Ausführungsvariante eines Sensorelements eines erfindungsgemäßen thermischen Durchflussmessgerätes;
Fig. 7 Perspektivansicht einer dritten Ausführungsvariante eines Sensorelements eines erfindungsgemäßen thermischen Durchflussmessgerätes;
Fig. 8 Seitenansicht einer dritten Ausführungsvariante eines Sensorelements eines erfindungsgemäßen thermischen Durchflussmessgerätes; und
Fig. 9 Schnittansicht einer dritten Ausführungsvariante eines Sensorelements eines erfindungsgemäßen thermischen Durchflussmessgerätes.

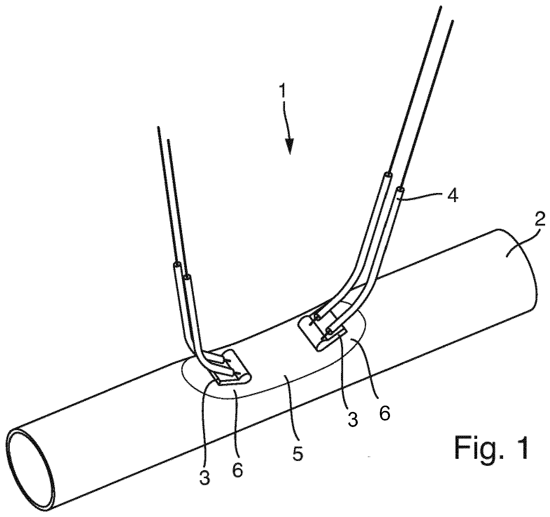

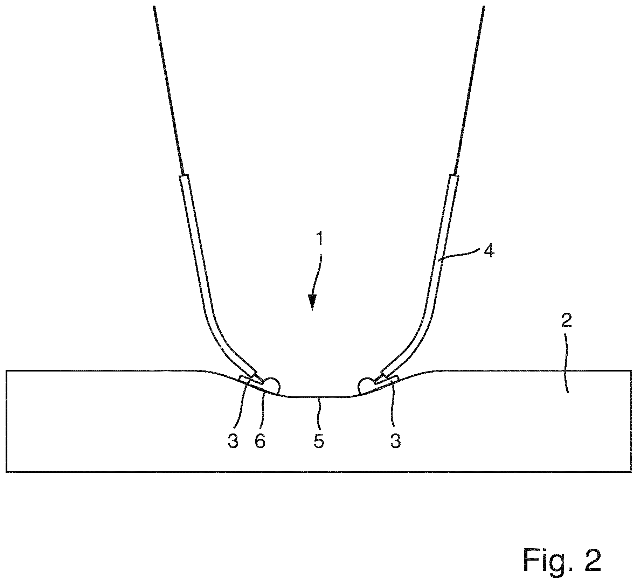

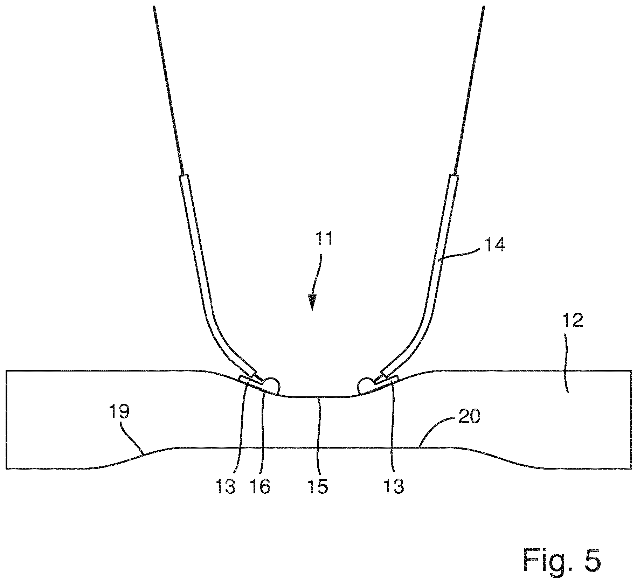

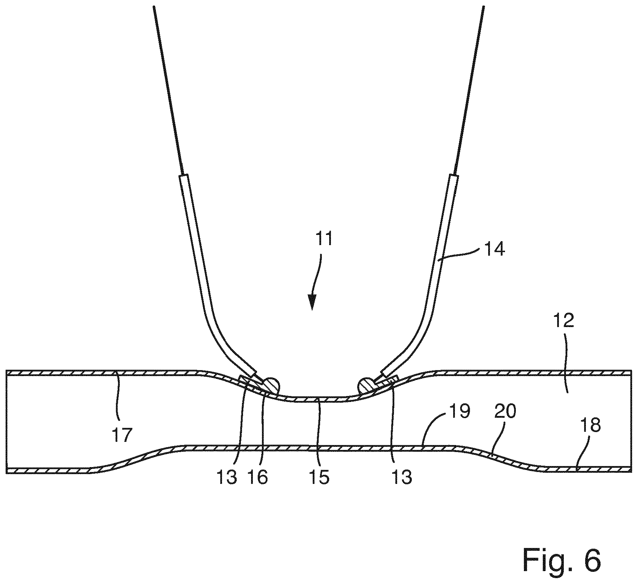

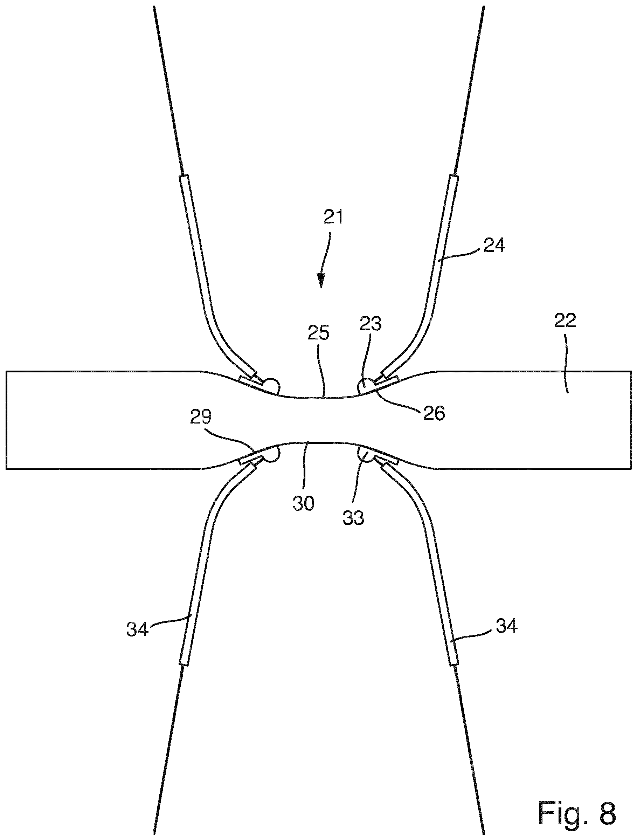

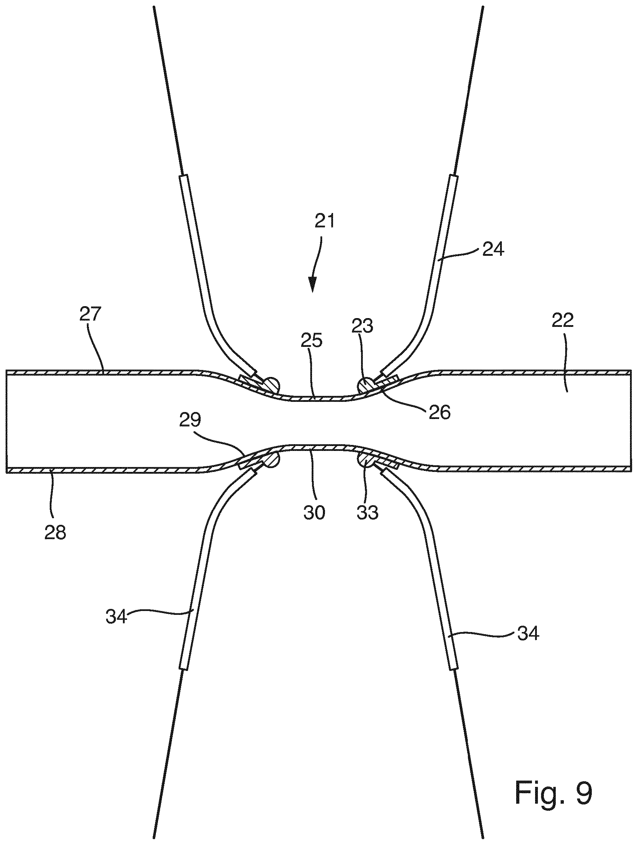

Fig. 1-9 zeigt in mehreren Varianten eine Sensoreinheit 1, 11 und 21 für ein thermisches Durchflussmessgerät. Eine Mess- und Auswerteeinheit, z.B. in Form eines Transmitters, ist zur Vereinfachung nicht in den Figuren dargestellt.

Ein übliches thermisches Durchflussmessgerät, so auch im vorliegenden Fall, weist zwei möglichst gleichartig ausgestaltete beheizbare Widerstandsthermometer auf, die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt mit dem Rohr verlötet sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometer wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Mass für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

Bei der Ermittlung des Massedurchflusses kann ein thermisches Durchflussmessgerät bei der Messung von Flüssigkeiten an eine Höchstleistungsgrenze gelangen. Da Flüssigkeiten gegenüber Gasen einen wesentlich höheren Wärmeleitkoeffizienten aufweisen, wird bei höherer Geschwindigkeit eine größere Wärmeenergie von der Oberfläche des aktiven Temperatursensors abtransportiert. Bei zunehmender Geschwindigkeit des Mediums ist dabei schnell eine Sättigung der Sensorkennlinie bzw. die Leistungsobergrenze der Messelektronik erreicht, so dass der Messbereich auf Flüssigkeiten mit geringen Strömungsgeschwindigkeiten begrenzt ist. Dieser Nachteil wird durch die Sensorvarianten eines thermischen Durchflussmessgerätes, wie sie in Fig. 1-9 abgebildet sind, behoben.

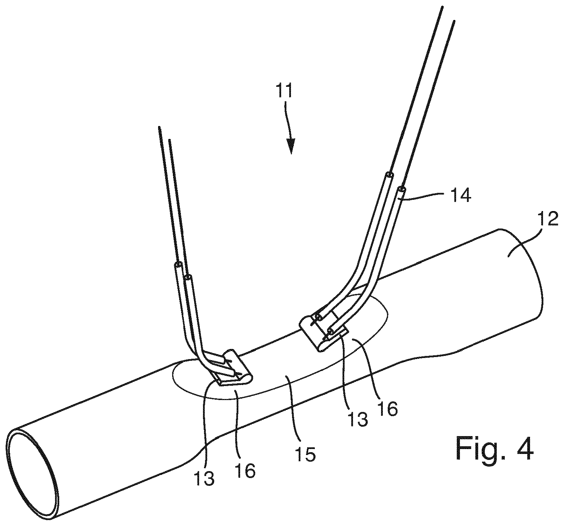

Die in Fig. 1-3 dargestellte Sensoreinheit 1 weist ein Messrohr 2 auf. Die Erfindung weist besondere Vorteile bei der Fertigung von Durchflussmessgeräten mit Messrohren im kleinen Nennweitenbereich auf. Dieser Bereich betrifft Messrohre mit Nennweiten von kleiner als DN20 auf. Entsprechende Messrohre 2 können beispielsweise eine Nennweite von DN10, DN8 oder DN6 aufweisen. Gleiches gilt für die Ausführungsvarianten der Fig. 4-9.

Das Messrohr 2 weist eine Längsachse auf. Das Messrohr 2 weist zudem einen Bereich auf In welchem das Messrohr 2 verengt ist. Diese Verengung ist vorzugsweise durch ein Umformverfahren in dem Messrohr 2 eingebracht. Gerade bei Messrohren mit dünnen Rohrwandungen von weniger als 1 cm, vorzugsweise weniger als 5 mm, können andere Ausbildungsvarianten, so z.B. Gussverfahren, zur Ausbildung des Messrohres nicht angewandt werden.

Die Verengung des Messrohres 2 der in Fig. 1 dargestellten Sensoreinheit 1 weist in Analogie zur DE 10 2013 108 099 A1 einen bestimmten Verlauf auf. Die Verengung weist ein ebenes Mittelsegment 5 auf, dessen Flächennormale senkrecht zur Längsachse des Messrohres verläuft.

Das Messrohr 2 weist außerhalb der Verengung eine Rohrkontur 8 auf. Diese ist in den meisten Anwendungen zylindrisch. In manchen Anwendungen sind allerdings auch Rohrkonturen mit dreieckigen, viereckigen oder vieleckigen Querschnitten bekannt. Auch diese sind als Rohrkontur zu verstehen.

Das Messrohr 2 weist im Bereich der Verengung zwischen der normalen Rohrkontur 8 und dem Mittelsegment 5 ein erstes und ein drittes Segment 6 auf, wobei das erste Segment 6 anströmseitig und das dritte Segment 6 abströmseitig zum Mittelsegment 5 angeordnet ist. Dieser Übergangsbereich besteht aus angewinkelten Flächen, deren Flächennormale die Messrohrachse in einem Winkel ungleich 90° schneidet. Das erste Segment 6, das Mittelsegment 5 und das dritte Segment 6 sind nebeneinander angeordnet.

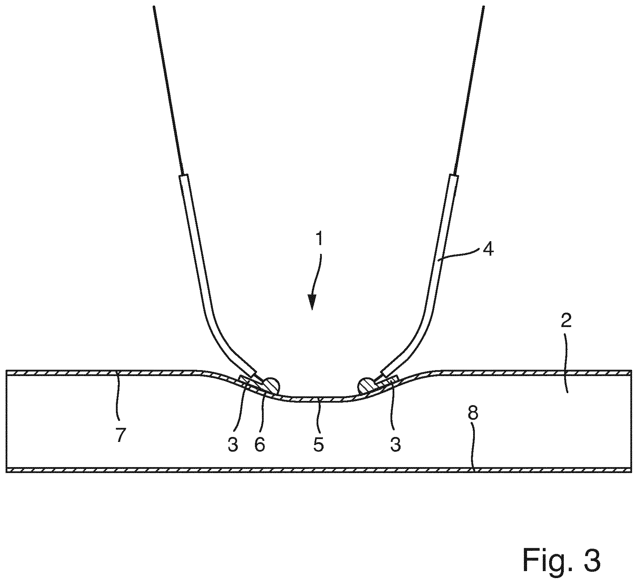

Dabei ist zumindest das erstes Segment in der Schnittansicht der Fig. 3 als eine gegenüber der Längsachse geneigte ebene Fläche ausgebildet, die bezogen auf die Längsrichtung der Rohrwandung 7 des Messrohres 2 einen Winkel von vorzugsweise zumindest 5° vorzugsweise zumindest 8°, besonders bevorzugt zwischen 10-35° einschließt. In Fig. 3 ist dieser Winkel 20°. Dabei kann die Fläche insbesondere eben ausgebildet sein, aufgrund von Oberflächenrauhigkeiten Unebenheiten aufweisen oder in einer Bogenform zum Messmedium hin oder vom Messmedium weg verlaufen.

An der Rohrwandung 7 des ersten Segments 6 ist ein erstes Temperaturfühlerelement mit einem ersten Widerstandsthermometer 3 angeordnet, dessen Aufbau im Folgenden anhand einer beispielhaften Ausgestaltung näher beschrieben wird. Dieses Widerstandsthermometer 3 ist vorzugsweise als ein Dünnschichtelement, ausgebildet. Das Widerstandsthermometer 3 weist einen dreischichtigen Aufbau auf, mit einem Keramiksubstrat, einer mäanderförmig ausgebildeten Metallschicht oder einem Metalldraht, vorzugsweise aus Platin, und einer darüber angeordneten Glasschutzschicht. Von dem Metalldraht oder der Metallschicht gehen eine Zu- und eine Ableitung ab.

Die Temperaturmessung erfolgt durch die Ausnutzung der Temperaturabhängigkeit eines elektrischen Widerstandes bei der Leitung von Strom. In diesem Betriebszustand wird der Widerstandsthermometer 4 als passiver Sensorelement eingesetzt. Das vorbeschriebene Widerstandsthermometer 4 misst als passives Sensorelement die Mediumstemperatur und bringt als aktives Sensorelement unter Einstellung der Stromstärke auch selbst eine Wärmemenge in das Medium. In diesem Fall ist das Widerstandsthermometer 4 des ersten Segments 3 ein aktives Sensorelement, welches eine konstante Temperatur aufweist und Wärmeenergie an das vorbeifließende Medium abgibt.

Dieses Sensorelement bzw. Widerstandsthermometer 4 ist vorzugsweise als Dünnschichtelement plattenförmig aufgebaut. In einer besonders bevorzugten Ausführungsvariante der Erfindung ist das plattenförmige Dünnschichtelement im Wesentlichen parallel zu der Fläche des ersten Seitensegments 6 ausgerichtet. Kleinere Abweichungen von weniger als 10°, vorzugsweise weniger als 5° zu der Parallelebene können dabei auftreten.

Im Folgenden wird eine erste Ausführungsvariante beschrieben in welcher das erste Widerstandsthermometer 3, welches an der Rohrwandung 7 des ersten Segments 3 angeordnet ist, als aktiver Sensorelement betrieben wird. Dabei handelt es sich bei dem anströmseitigen Segment 6 um das Segment der Verengung, auf welches die Strömung des Mediums in Strömungsrichtung als erstes trifft.

Auf ähnliche Weise wie das erste Widerstandsthermometer 3 ist vorzugsweise ein zweites Temperaturfühlerelement mit einem zweiten Widerstandsthermometer 3 im Sensorelement 1 an der Rohrwandung 7 des zweiten Seitensegments 6 angeordnet. Dabei fungiert dieses zweite Widerstandsthermometer 3 in der vorliegenden ersten Ausführungsvariante als passives Widerstandsthermometer zur Erfassung der Mediumstemperatur.

Gegenüber den Ausführungsvarianten der DE 10 2013 108 099 A1 sind die Widerstandsthermometer 3 direkt an der Rohrwandung festgelegt. Dies kann z.B. durch eine Lötverbindung erfolgen oder durch einen wärmeleitenden Kleber.

Das Messrohr besteht dabei vorzugsweise aus Metall. Von den Widerstandsthermometern 3 gehen jeweils zwei Verbindungsdrähte 4 ab zur Energieversorgung und zur Signalübertragung an eine nicht-näher dargestellte Mess- und Auswerteeinheit. Die Energieversorgung und die Signalübertragung kann allerdings auch über einen einzelnen Verbindungsdraht erfolgen.

Um eine externen Temperatureinflüssen entgegenzuwirken empfiehlt sich das Messrohr mit den Widerstandsthermometern 3 mit einem nicht näher dargestellten Gehäuse zu versehen.

Die durch die spezielle Ausgestaltung des Sensors 1 in Kombination mit dem am ersten Segment 6 angeordneten aktiven Sensorelement 3 erreichten Effekte werden nachfolgend näher erläutert.

Die Neigung des ersten anströmseitig angeordneten Segments 6 bewirkt eine Vergrößerung der thermischen Grenzschichtdicke verglichen zu einer planaren Oberfläche, und es erfolgt die Ausformung einer vergleichsweise gleichmäßig über die Oberfläche verteilten eng anliegenden Grenzschicht. Durch diese Grenzschicht wird die Wärmeabgabe des aktiven Sensorelements reduziert. Anders gesagt, wird durch das Vorhandensein der Grenzschicht der Temperaturgradient zwischen Medium und Sensoroberfläche verringert, wodurch ein geringerer Wärmeeintrag erfolgt. Durch die Grenzschicht benötigt der Sensor eine geringere Leistung im Messbetrieb.

In einer zweiten bevorzugten Ausführungsvariante der Erfindung wird das zweite Widerstandsthermometer 3 des stromabwärtig angeordneten dritten Segments 6 als aktives Sensorelement betrieben und das erste Widerstandsthermometer 3 des stromaufwärtig angeordneten ersten Segments 6 als passives Sensorelement.

Bei geringeren Strömungsgeschwindigkeiten erfolgt ein Grenzschichtaufbau über die gesamte Stirnfläche 3 des Sensors und liegt in besonders hoher Schichtdicke im stromabwärtigen Bereich vor. Diese Grenzschicht ermöglicht, wie schon im vorangegangenen Ausführungsbeispiel beschrieben, einen geringeren Wärmeeintrag in das Medium und damit ein Hinauszögern des Sättigungsgrades auf höhere Fließgeschwindigkeiten des Mediums.

Im hinteren Teil am Übergang zwischen dem Mittelsegment 5 und dem zweiten stromabwärtigen Segment 6 wird zudem eine Abrisskante geschaffen, an welcher die Strömung bei höheren Geschwindigkeiten abreißt. Zugleich wird dabei bei erhöhter Geschwindigkeit des Mediums eine Rezirkulation aufgebaut, also eine Strömung welche der Hauptströmungsrichtung zumindest teilweise entgegengerichtet ist. Diese Rezirkulation ist langsamer, vorzugsweise um zumindest 60% langsamer, besonders bevorzugt um mindestens 80% langsamer als die Hauptströmung, verhält sich zur Hauptströmung jedoch proportional. Der der Hauptströmung entgegengerichtete Teil der Rezirkulation streicht in Mediumsrichtung unterhalb des Übergangs bzw. unterhalb der Abrisskante an dem dritten Segment vorbei und nimmt dabei eine geringere Wärmeenergie auf, als dies bei der Hauptströmung der Fall wäre. Dadurch wird weniger Leistung zur Aufrechterhaltung der Temperatur benötigt und eine Leistungssättigung tritt erst bei sehr hohen Fließgeschwindigkeiten auf.

Somit beruht die optimierte Geometrie des Sensors auf zwei unterschiedlichen Phänomenen, der Ausbildung einer strömungsgeschwindigkeitsabhängigen Rezirkulation im Abströmbereich bei hohen Geschwindigkeiten und der Ausbildung einer einheitlichen Grenzschicht im Anströmbereich.

Zusammengefasst liefert die neue Sensorgeometrie stabilere und verlässlichere Messwerte als bisherige Geometrien.

Die in Fig. 1-3 dargestellte Verengung ist durch Umformung von einer Seite in das Messrohr 2 eingebracht.

Eine weitere Ausführungsvariante eines Sensorelements 11 gemäß der Erfindung ist in Fig. 4-6 dargestellt. Hier weist die Rohrwandung der Variante in Fig. 1-3 eine Verengung aus, welche sowohl von einer Seite, z.B. von oben, als auch von einer gegenüberliegenden Seite, z.B. von unten, in das Messrohr eingebracht ist.

In dieser Ausführungsvariante sind im Bereich der Verengung zwei ebene Mittelsegmente 15 und 20 angeordnet, welche parallel zueinander angeordnet sind und welche beide eine Flächennormale aufweisen, die senkrecht zur Längsachse des Messrohres 12 angeordnet sind. Die Mittelsegment 15 und 20 sind allerdings unterschiedlich lang bezogen auf die Ausbreitungsrichtung entlang der Längsachse dimensioniert. Zur Ermittlung des Durchflusses analog zu Fig. 1-3 sind Widerstandsthermometer 13 im ersten und des dritten Segment 16 von außen an der Messrohrwandung 17 angeordnet. Eine Anordnung von außen an der Messrohrwand bedeutet, dass es sich bei dieser Oberfläche der Messrohrwandung um keine mediumsberührende Oberfläche handelt. Es geht also um eine Anordnung am Außenumfang des Messrohres bzw. an der Außenwand des Messrohres.

Zwischen dem ersten und dem dritten Segment 16 liegt dabei das kürzere der beiden Mittelsegmente 15 und 20.

Der Rohrkontur 18 ist auch in diesem Beispiel zylindrisch ausgebildet. Im Bereich der Verengung weist die Form des Messrohres von dieser Rohrkontur ab, wobei sich der Messrohrquerschnitt verringert. Die Rohrwandung 17 des Messrohres 12 ist vorzugsweise durch ein Umformverfahren derart umgeformt, dass die Mittelsegmente ausgebildet sind. Zwischen den Mittelsegmenten 15 und 20 und der Rohrkontur 18 sind erste und dritte Segmente 16, sowie vierte und sechste Segmente 19 angeordnet, welche vorzugsweise eben ausgebildet sind. Deren Flächennormale weisen eine Winkel von ungleich 90° zur Längsachse auf. Insbesondere ist die Flächennormale der Segmente 16 und 19 gegenüber der Längsachse ungleich 90°. Das erste, dritte, vierte und sechste Segment 16 und 20 weisen insbesondere den gleichen Neigungswinkel gegenüber der Längsachse des Messrohres 12 bzw. gegenüber dem Längsverlauf der Messrohrwandung 17 auf. Der einem ersten Rohrwandungsbereich mit dem nebeneinanderliegenden ersten Segment 16, dem Mittelsegment 15 und dem dritten Segment 16 gegenüberliegende zweite Rohrwandungsbereich mit dem nebeneinanderliegenden vierten Segment 19, dem Mittelsegment 20 und dem sechsten Segment 19 ist dabei großflächiger dimensioniert als der erste Rohrwandungsbereich.

Die Einbringung des zweiten Rohrwandungsbereichs in das Messrohr kann insbesondere in einem gemeinsamen Umformschritt mit dem Einbringen des ersten Rohrwandungsbereichs erfolgen und dient dient der zusätzlichen Strömungskonditionierung.

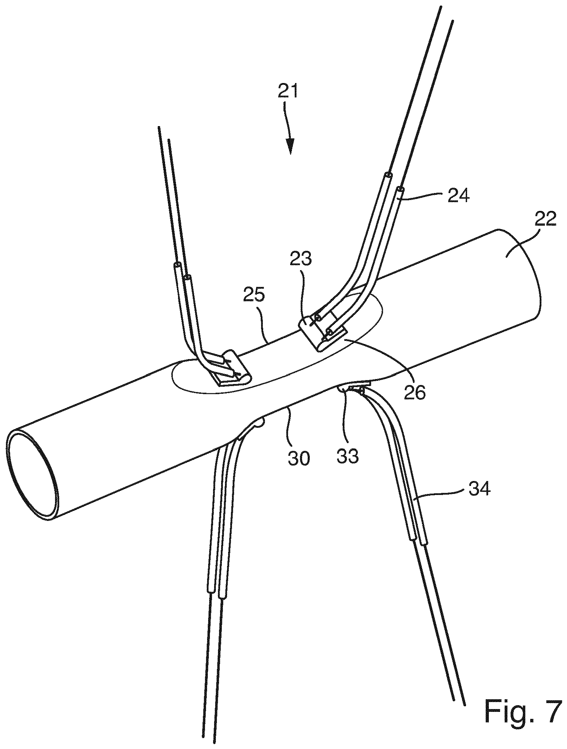

Fig. 7 bis 9 zeigt ein weiteres Ausführungsbeispiel eines Sensorelements 21 gemäß der Erfindung. Auch hier wird die Verengung des Messrohres 22 durch zwei Rohrwandungsbereiche hervorgerufen, welche jedoch in diesem Ausführungsbeispiel in gleicher Weise dimensioniert sind und sich diametral gegenüberliegen.

In Analogie zu Fig. 4-6 weist das Messrohr ebenfalls zwei ebene Mittelsegmente 25 und 30 auf, welche in Abweichung von der normalen zylindrischen Rohrkontur 28 in die Messrohrwandung 27 eingebracht, vorzugsweise eingeformt, sind.

Im Übergangsbereich zwischen den jeweiligen Mittelsegmenten 25 und 30 sind jeweils geneigte, vorzugsweise ebene Segmente 26 und 29 angeordnet. Auf diesen Segmenten sind an der Rohrwandung von außen Temperatursensoren 23 und 33 angeordnet, von welchen Anschlusskabel 24, 34 zur Energie- und Signalübertragung abgehen.

Durch die gegenüberliegenden Widerstandsthermometer 24 und 34 können Messfehler kompensiert werden und Redundanzmessungen zur Überprüfung der Genauigkeit der Durchflussmessung durch die erfolgen.

Die Effekte, welche sich aus der speziellen Geometrie ergeben sind im Detail in der DE 10 2013 108 099 A1 beschrieben und dargestellt, auf welche im Rahmen der vorliegenden Anmeldung vollumfänglich Bezug genommen wird.

Das in Fig. 1-9 dargestellte Sensorelement in seinen verschiedenen Ausführungsvarianten eignet sich hervorragend zur Anwendung bei Strömungen mit niedrigen Drücken bis zu etwa 40 bar. Dabei weist das Sensorelement im Bereich der Verengung eine Wandstärke von besonders bevorzugt 0,3 - 1 mm, insbesondere 0,4 - 0,7 mm auf. Die Wandstärke ist auf die Ansprechzeit des Sensors optimiert.

### Bezugszeichen

- 1, 11, 21: Sensorelement
- 2, 12, 22: Messrohr
- 3, 13, 23, 33: Widerstandsthermometer
- 4, 14, 24, 34: Kabel zur Signalübertragung und/oder Energieversorgung
- 5, 15, 25: erstes Mittelsegment
- 6, 16, 26: erstes und/oder drittes Segment
- 7, 17, 27: Rohrwandung
- 8, 18 ,28: Rohrkontur
- 19, 29: viertes und/oder sechstes Segment
- 20, 30: zweites Mittelsegment

## Patentansprüche

1. Thermisches Durchflussmessgerät zur Bestimmung und/oder Überwachung eines thermischen Massedurchflusses eines Messmediums umfassend ein Sensorelement (1, 11, 21) mit einem Messrohr (2, 12, 22) mit einer Rohrwandung (7, 17, 27) und mit zumindest einem ersten und einem zweiten Temperaturfühlerelement, welche insbesondere als Widerstandsthermometer (3, 13, 23, 33) ausgebildet sind,
wobei zumindest eines der Temperaturfühlerelemente beheizbar ist,
wobei das Messrohr (2, 12, 22) eine Längsachse und eine Rohrkontur (8, 18, 28) mit einem ersten Rohrquerschnitt in den Endbereichen des Messrohres (2, 12, 22) aufweist,
wobei das Messrohr (2, 12, 22) eine Verengung aufweist mit einem zweiten Rohrquerschnitt, welcher in Form und/oder Flächeninhalt vom ersten Rohrquerschnitt abweicht,
wobei die Verengung in zumindest drei Segmente, ein erstes Segment (6, 16, 26), ein Mittelsegment (5, 15, 25) und ein drittes Segment (6, 16, 26) aufgeteilt ist,
wobei die Segmente (5, 6, 15, 16, 25, 26) in dieser Reihenfolge in Strömungsrichtung aufeinander folgend angeordnet sind,
wobei das erste und dritte Segment (6, 16, 26) jeweils als eine gegenüber der Längsachse geneigte ebene Fläche ausgebildet sind, die gegenüber der Längsachse des Messrohres (2, 12, 22) um einen Winkel von zumindest 5° angewinkelt ist und
wobei in dem ersten und dritten Segment (6, 16, 26) jeweils eines der Temperaturfühlerelemente von außen an der Rohrwandung (7, 17, 27) des Messrohres (2, 12, 22) angeordnet ist und sich im thermischen Kontakt mit dem Messmedium befindet.

2. Thermisches Durchflussmessgerät nach Anspruch 1, **dadurch gekennzeichnet, dass** die Verengung Teil der Rohrwandung (7, 17, 27) ist.

3. Thermisches Durchflussmessgerät nach einem der vorhergehenden Ansprüche, **dadurch gekennzeichnet, dass** das Mittelsegment (5, 15, 25) eben ausgebildet ist mit einer Flächennormalen, welche senkrecht zur Längsachse des Messrohres (2, 12, 22) steht

4. Thermisches Durchflussmessgerät nach einem der vorhergehenden Ansprüche, **dadurch gekennzeichnet, dass** die Rohrwandung (7, 17, 27), zumindest jedoch die Segmente (6, 16, 26, 29) der Rohrwandung (7, 17, 27) an welchen die Temperaturfühlerelemente (3, 13, 23, 33) angeordnet sind, eine Wandstärke von kleiner als 1cm, vorzugsweise kleiner oder gleich 0,5 mm, aufweist.

5. Thermisches Durchflussmessgerät nach einem der vorhergehenden Ansprüche, **dadurch gekennzeichnet, dass** die Rohrkontur (8, 18, 28) des Messrohres (2, 12, 22) eine Nennweite von kleiner DN 20, aufweist.

6. Thermisches Durchflussmessgerät nach einem der vorhergehenden Ansprüche, **dadurch gekennzeichnet, dass** das Messrohr (2, 12, 22) zwei ebene Mittelsegmente (15, 20, 25, 30) aufweist, welche sich diametral am Messrohr (2, 12, 22) gegenüberstehen und welche eine Flächennormale aufweisen, welche senkrecht zur Längsachse des Messrohres (2, 12 22) verläuft.

7. Thermisches Durchflussmessgerät nach einem der vorhergehenden Ansprüche, **dadurch gekennzeichnet, dass** die Verengung mit den zumindest zwei Segmenten (6, 16, 26) durch ein Umformverfahren in das Messrohr (2, 12, 22) eingebracht ist.

8. Thermisches Durchflussmessgerät nach einem der vorhergehenden Ansprüche, **dadurch gekennzeichnet, dass** zumindest eines der Segmente (6, 16, 26) gegenüber der Längsachse des Messrohres (2, 12, 22) um einen Winkel von zumindest 8° besonders bevorzugt zwischen 10-35° angewinkelt ist.

## Claims

1. Thermal flowmeter for determining and/or monitoring a thermal mass flow of a measured medium, wherein said flowmeter comprises a sensor element (1, 11, 21) with a measuring tube (2, 12, 22) with a tube wall (7, 17, 27) and with at least a first and a second temperature sensor element, which are particularly formed as a resistance thermometer (3, 13, 23, 33),
wherein at least one of the temperature sensor elements can be heated, wherein the measuring tube (2, 12, 22) has a longitudinal axis and a tube contour (8, 18, 28) with a first tube cross-section in the end sections of the measuring tube (2, 12, 22),
wherein the measuring tube (2, 12, 22) has a constriction with a second tube cross-section which differs from the first tube cross-section in terms of its shape and/or surface,
wherein the constriction is divided into at least three segments, a first segment (6, 16, 26), a central segment (5, 15, 25) and a third segment (6, 16, 26),
wherein the segments (5, 6, 15, 16, 25, 26) are arranged one after another in this order in the flow direction,
wherein the first and third segment (6, 16, 26) are each formed as a flat surface inclined in relation to the longitudinal axis, wherein said surface is inclined at an angle of at least 5° in relation to the longitudinal axis of the measuring tube (2, 12, 22), and
wherein, in the first and third segment (6, 16, 26), one of the temperature sensor elements is arranged, in each case, on the wall (7, 17, 27) of the measuring tube (2, 12, 22) on the outside and is in thermal contact with the measured medium.

2. Thermal flowmeter as claimed in Claim 1, **characterized in that** the constriction is part of the tube wall (7, 17, 27).

3. Thermal flowmeter as claimed in one of the previous claims, **characterized in that** the central segment (5, 15, 25) is flat with a surface normal that is perpendicular to the longitudinal axis of the measuring tube (2, 12, 22).

4. Thermal flowmeter as claimed in one of the previous claims, **characterized in that** the tube wall (7, 17, 27), but at least the segments (6, 16, 26, 29) of the tube wall (7, 17, 27) on which the temperature sensor elements (3, 13, 23, 33) are arranged, have a wall thickness less than 1 cm, preferably less than or equal to 0.5 mm.

5. Thermal flowmeter as claimed in one of the previous claims, **characterized in that** the tube contour (8, 18, 28) of the measuring tube (2, 12, 22) has a nominal diameter less than DN 20.

6. Thermal flowmeter as claimed in one of the previous claims, **characterized in that** the measuring tube (2, 12, 22) has two flat central segments (15, 20, 25, 30) which are diametrically opposite on the measuring tube (2, 12, 22) and which have a surface normal which is perpendicular to the longitudinal axis of the measuring tube (2, 12, 22).

7. Thermal flowmeter as claimed in one of the previous claims, **characterized in that** the constriction with the at least two segments (6, 16, 26) is introduced in the measuring tube (2, 12, 22) by a forming process.

8. Thermal flowmeter as claimed in one of the previous claims, **characterized in that** at least one of the segments (6, 16, 26) is inclined in relation to the longitudinal axis of the measuring tube (2, 12, 22) at an angle of at least 8°, preferably between 10 and 35°.

## Revendications

1. Débitmètre thermique destiné à la détermination et/ou à la surveillance d'un débit massique thermique d'un produit, lequel débitmètre comprend un élément capteur (1, 11, 21) avec un tube de mesure (2, 12, 22) avec une paroi de tube (7, 17, 27) et avec au moins un premier et un deuxième élément capteur de température, lesquels éléments capteurs sont réalisés notamment sous forme de thermorésistances (3, 13, 23, 33),
au moins l'un des éléments capteur de température pouvant être chauffé,
le tube de mesure (2, 12, 22) présentant un axe longitudinal et un contour de tube (8, 18, 28) avec une première section transversale de tube dans les zones d'extrémité du tube de mesure (2, 12, 22),
le tube de mesure (2, 12, 22) présentant un rétrécissement avec une deuxième section transversale de tube qui diffère de la première section transversale de tube par sa forme et/ou sa surface,
le rétrécissement étant divisé en au moins trois segments, un premier segment (6, 16, 26), un segment central (5, 15, 25) et un troisième segment (6, 16, 26), les segments (5, 6, 15, 16, 25, 26) étant disposés dans cet ordre les uns à la suite des autres dans le sens de l'écoulement,
le premier et le troisième segment (6, 16, 26) étant respectivement conçus comme une surface plane inclinée par rapport à l'axe longitudinal, laquelle surface est inclinée d'un angle d'au moins 5° par rapport à l'axe longitudinal du tube de mesure (2, 12, 22), et
débitmètre pour lequel, dans le premier et le troisième segment (6, 16, 26), l'un des éléments capteur de température est disposé de l'extérieur sur la paroi (7, 17, 27) du tube de mesure (2, 12, 22) et est en contact thermique avec le produit mesuré.

2. Débitmètre thermique selon la revendication 1, **caractérisé en ce que** le rétrécissement fait partie de la paroi de tube (7, 17, 27).

3. Débitmètre thermique selon l'une des revendications précédentes, **caractérisé en ce que** le segment central (5, 15, 25) est plan avec une normale à la surface qui est perpendiculaire à l'axe longitudinal du tube de mesure (2, 12, 22).

4. Débitmètre thermique selon l'une des revendications précédentes, **caractérisé en ce que** la paroi de tube (7, 17, 27), néanmoins au minimum les segments (6, 16, 26, 29) de la paroi de tube (7, 17, 27) sur lesquels sont disposés les éléments capteur de température (3, 13, 23, 33), présente une épaisseur de paroi inférieure à 1 cm, de préférence inférieure ou égale à 0,5 mm.

5. Débitmètre thermique selon l'une des revendications précédentes, **caractérisé en ce que** le contour de tube (8, 18, 28) du tube de mesure (2, 12, 22) présente un diamètre nominal inférieur à DN 20.

6. Débitmètre thermique selon l'une des revendications précédentes, **caractérisé en ce que** le tube de mesure (2, 12, 22) présente deux segments centraux plans (15, 20, 25, 30) qui sont diamétralement opposés sur le tube de mesure (2, 12, 22) et qui présentent une normale à la surface qui est perpendiculaire à l'axe longitudinal du tube de mesure (2, 12, 22).

7. Débitmètre thermique selon l'une des revendications précédentes, **caractérisé en ce que** le rétrécissement avec les au moins deux segments (6, 16, 26) est introduit dans le tube de mesure (2, 12, 22) par un procédé de formage.

8. Débitmètre thermique selon l'une des revendications précédentes, **caractérisé en ce qu'**au moins l'un des segments (6, 16, 26) est incliné par rapport à l'axe longitudinal du tube de mesure (2, 12, 22) d'un angle d'au moins 8°, de préférence entre 10 et 35°.
